(19) Europäisches Patentamt

European Patent Office

Office européen des brevets

(11) Veröffentlichungsnummer : **0 013 993**
**B1**

(12) **EUROPÄISCHE PATENTSCHRIFT**

(45) Veröffentlichungstag der Patentschrift :
22.09.82

(21) Anmeldenummer : 80100379.9

(22) Anmeldetag : 25.01.80

(51) Int. Cl.³ : **G 05 D 23/12, F 23 N 5/06**

(54) Druckregler.

(30) Priorität : 27.01.79 DE 2903203

(43) Veröffentlichungstag der Anmeldung :
06.08.80 (Patentblatt 80/16)

(45) Bekanntmachung des Hinweises auf die Patenterteilung : 22.09.82 Patentblatt 82/38

(84) Benannte Vertragsstaaten :
DE FR GB IT NL

(56) Entgegenhaltungen :
DE B 2 646 310

(73) Patentinhaber : HONEYWELL B.V.
Rijswijkstraat 175
Amsterdam (NL)

(72) Erfinder : Berkhof, Hendrikus
Stuwwal 7
Emmen (NL)

(74) Vertreter : Rentzsch, Heinz et al
Honeywell Europe S.A. Holding KG Kaiserleistrasse
55
D-6050 Offenbach am Main (DE)

Imprimerie Jouve, 18, rue St-Denis, 75001 Paris, France

Druckregler

Die Erfindung bezieht sich auf einen Druckregler gemäß Gattungsbegriff des Anspruchs 1. Ein solcher Druckregler ist aus der DE-AS 26 46 310 bekannt. Dabei ist zwischen der ersten Einstellfeder und der Membran eine zusätzliche Hilfsfeder vorgesehen, um den Proportionalbereich des Druckreglers zu verbreitern.

Aufgabe der vorliegenden Erfindung ist es, im Proportionalbereich die Neigung der Kennlinie des Ausgangsdrucks in Abhängigkeit von der Temperatur einstellbar zu machen, um auf diese Weise den Druckregler an unterschiedliche Erfordernisse, beispielsweise unterschiedliche Gassorten, anpassen zu können. Diese Aufgabe wird gelöst durch die im Anspruch 1 gekennzeichnete Erfindung. Vorteilhafte Weiterbildungen ergeben sich aus den Unteransprüchen.

Die Erfindung wird nachfolgend anhand eines in der Zeichnung wiedergegebenen Ausführungsbeispiels erläutert. Dabei zeigt

Figur 1   einen Schnitt durch den Druckregler ;

Figur 2   eine Einzelheit einer abgewandelten Ausführungsform eines solchen Druckreglers ;

Figur 3   den Kennlinienverlauf des Ausgangsdruckes P des Druckreglers in Abhängigkeit von der gemessenen Temperatur T.

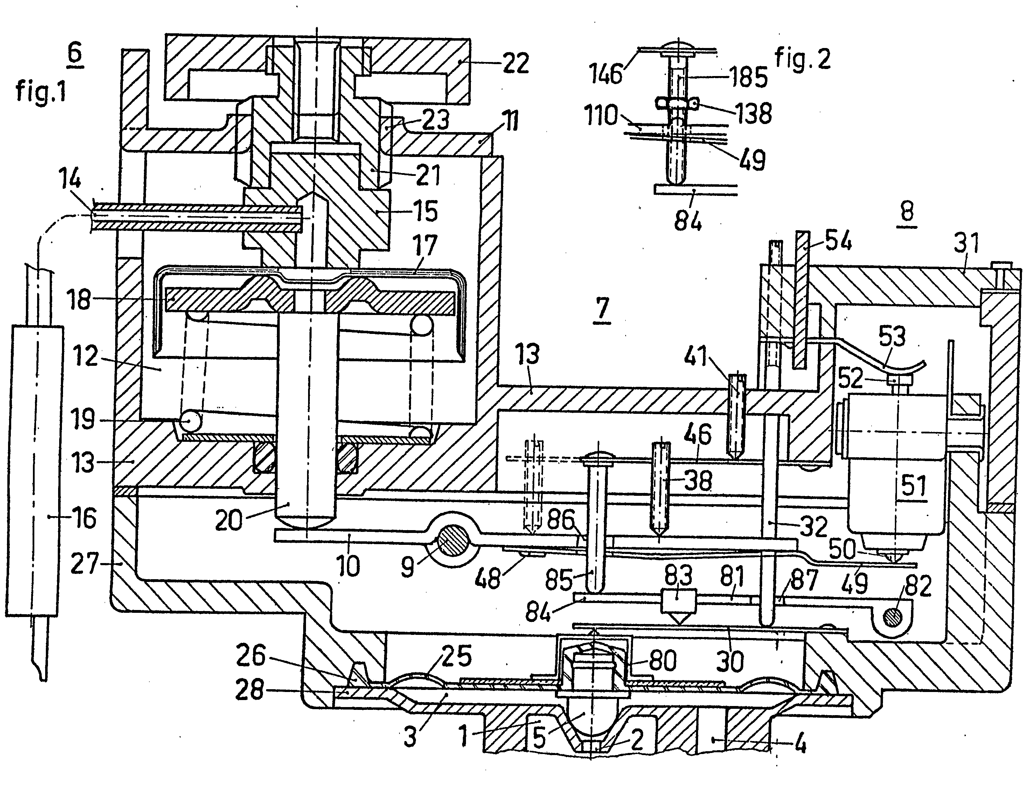

Der in Fig. 1 dargestellte Druckregler wird auf ein servogesteuertes Gasventil aufgesetzt, dessen Schließkörper durch eine Feder in Schließrichtung vorgespannt ist und durch den Druckunterhalb einer Membran gegen die Kraft der genannten Feder geöffnet werden kann. Der vom dargestellten Druckregler erzeugte Druck wird der genannten Membrankammer als Steuerdruck zugeführt. Dieser Steuerdruck entsteht in der Ventilkammer 1 unterhalb des Ventilsitzes 2 des Druckreglers, welche eingangsseitig über eine Leitungsdrossel mit dem Einlaß des Gasregelventils verbunden und damit dem höchsten vorhandenen Gasdruck ausgesetzt ist. Die Kammer 3 oberhalb des Ventilsitzes 2 steht über eine Auslaßleitung 4 mit dem Auslaß des Gasregelventils in Verbindung. Der Ventilkörper 5 des Druckreglers steuert somit den Steuerdruck in der Kammer 1, indem er über das Ventil 2,5 einen Teil des Drucks in der Kammer 1 über den Auslaß 4 zur Ausgangsseite des Ventils entweichen läßt oder nicht. Das Servosystem ist derart aufgebaut und angeschlossen, daß mit wachsendem Steuerdruck in der Kammer 1 das Hauptventil des Gasregelgerätes in zunehmendem Maße geöffnet wird und bei verschwindendem Steuerdruck durch Federkraft schließt.

Der im gezeigten Ausführungsbeispiel von einer gemessenen Temperatur als Führungsgröße beaufschlagte Druckregler besteht im wesentlichen aus drei Teilen, nämlich aus einem links dargestellten Thermostatteil 6, dem in der Mitte gezeigten Druckregler 7 sowie einem rechts eingezeichneten Übertemperaturschalter 8, die untereinander mit Hilfe eines ersten um eine gestellfeste Achse 9 schwenkbaren Übertragungshebels 10 in Wirkverbindung stehen. Der Thermostatteil 6 ist in einer durch einen Deckel 11 verschlossenen Ausnehmung 12 des Gehäuseoberteils 13 untergebracht. Über ein Kapillarrohr 14 und ein Anschlußstück 15 ist ein mit einer Ausdehnungsflüssigkeit gefüllter Temperaturfühler 16 an eine Membrankapsel 17 angeschlossen, deren Membran sich über einen Membranteller 18 und eine Feder 19 am Boden der Ausnehmung 12 abstützt. Der Membranteller 18 trägt einen Stift 20, der auf das linke Ende des Übertragungshebels 10 einwirkt. Über das Anschlußstück 15 und einen Gewindeeinsatz 21, welcher mit Hilfe des Einstellknopfes 22 in dem Innengewinde 23 des Deckels 11 verstellbar ist, kann die Membrankapsel 17 in Richtung des Stiftes 20 gegen die Kraft der Feder 19 verschoben und damit die gewünschte Solltemperatur eingestellt werden.

Der mit dem Ventilsitz 2 des Druckreglers 7 zusammenwirkende Schließkörper 5 wird von einer kreisscheibenförmigen Membran 25 getragen, welche mit einer umlaufenden Verdickung 26 am äußeren Rand zwischen dem Gehäuseunterteil 27 und einer zugleich den Ventilsitz 2 aufweisenden Abschlußplatte 28 eingespannt ist. Die Membran 25 stützt sich über einen Bügel 80 an einer ersten Blattfeder 30 ab. Diese ist mit ihrem rechten Ende gehäusefest eingespannt. Ihre Federspannung wirkt in Richtung auf die Membran 25. Die Größe der Federvorspannung läßt sich mit Hilfe eines im Deckel 31 verstellbaren Gewindestiftes 32 entsprechend der gewünschten Mindestdurchsatzmenge des Gasventils einstellen, indem auf diese Weise der Mindest-Ausgangsdruck des Druckreglers vorgegeben wird. Parallel zur ersten Blattfeder 30 erstreckt sich ein zweiter Übertragungshebel 81, welcher um eine gehäusefeste Achse 82 schwenkbar ist. Auf ihm ist ein Schieber 83 verschiebbar geführt, welcher auf der ersten Blattfeder aufliegt. Am freien Ende 84 des zweiten Übertragungshebels 81 greift ein von einer zweiten Blattfeder 46 getragener Stift 85 an, welcher berührungsfrei durch eine Ausnehmung 86 im ersten Übertragungshebel 10 hindurchragt. Die zweite Blattfeder 46 ist an Ihrem rechten Ende ebenfalls ortsfest eingespannt. Ihre Federspannung kann mit Hilfe eines im Gehäuseoberteil 13 verstellbaren Gewindestifts 41 eingestellt werden. Hiermit kann man den vom Druckregler abgegebenen Maximaldruck und damit den maximalen Durchsatz des Gasregelventils auf einen gewünschten Wert einstellen. In die zweite Blattfeder 46 ist ferner ein Gewindestift 38 eingeschraubt, dessen freies Ende dem rechten Hebelarm des ersten Übertragungshebels 10 gegenübersteht.

An diesem rechten Hebelarm des ersten Übertragungshebels ist mittels eines Niets 48 ein Federblech 49 befestigt, dessen freies Ende auf den Stößel 50 eines als Übertemperaturschalter dienenden Schnappschalters 51 einwirkt. Seine Anschlußkontakte 52 stehen über Anschlußfedern 53 mit den äußeren Anschlußstiften 54 in Verbindung. Diese sind in den Isolierstoffdeckel 31 eingesetzt. Die Schaltstrecke des Schnappschalters 51 ist beispiels in Reihe mit dem Kontakt eines nicht dargestellten Raumthermostaten in den Stromkreis der Erregerwicklung eines das Servosystem einschaltenden Magnetventils eingeschaltet. Der an die Membrankapsel 17 angeschlossene Temperaturfühler 16 mißt beispielsweise die Kesselwassertemperatur. Der Schalter 51 ist ein Ruhekontaktschalter, welcher beim Überschreiten einer vorgegebenen Kesselwassertemperatur seinen Schaltkontakt öffnet und damit den Erregerstromkreis für das Servo-Magnetventil unterbricht. Letzteres liegt zwischen der eingangs erwähnten Drosselstelle und der Kammer 1, so daß die Zufuhr des Eingangsdrucks zur Kammer 1 abgeschaltet wird, sobald der in Reihe mit dem Schalter 51 geschaltete Raumthermostat keine Wärmezufuhr fordert und/oder die Kesselwassertemperatur den durch den Ansprechwert des Schalters 51 definierten Grenzwert überschritten hat.

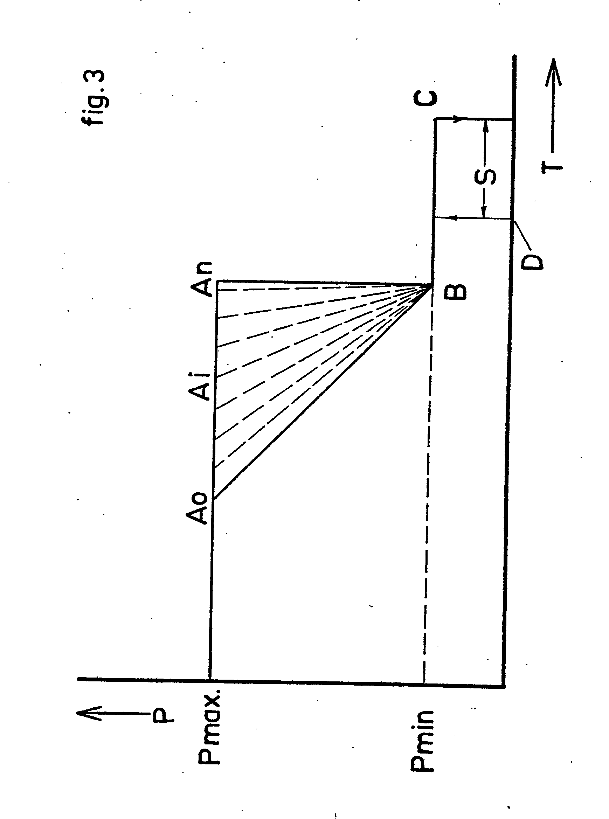

Der thermostatisch gesteuerte Druckregler arbeitet wie folgt : Ist die vom Temperaturfühler 16 gemessene Temperatur sehr niedrig, beispielsweise bei Einschaltung der Anlage, so drückt die Feder 19 die Membrankapsel 17 so weit wie möglich zusammen, d.h. den Stift 20 nach oben. In diesem Zustand überträgt der Übertragungshebel 10 keine Kraft auf den Schalter 51 oder den Gewindestift 38. Der Stift 85 wird unter der vollen Federspannung der zweiten Blattfeder 46 in Richtung auf den zweiten Übertragungshebel 81 gedrückt, dessen Schieber 83 die Kraft auf die erste Blattfeder 30 überträgt. Letztere liegt am Bügel 80 des Membrantellers der Membran 25 an. Unter der Kraft des Stiftes 85 wird die Membran 25 nach unten gedrückt und damit der Schließkörper 5 gegen den Ventilsitz 2. Damit nimmt der Steuerdruck in der Kammer 1 seinen höchsten Wert an, wie es in Fig. 3 auf der linken Seite des Diagramms dargestellt ist. Dieser maximale Steuerdruck öffnet das Hauptventil bis zum maximal zulässigen Durchsatz. Mit Hilfe des Gewindestifts 41 kann der maximale Steuerdruck und damit der maximale Durchsatz eingestellt werden.

Mit der Gaszufuhr durch das Hauptventil zum Hauptbrenner steigt die vom Temperaturfühler 16 gemessene Temperatur, so daß sich bei Ausdehnung des Wärmeübertragungsmediums die Membrankapsel 17 ausdehnt und den Stift 20 nach unten bewegt. Solange im Zuge dieser Bewegung der rechte Hebelarm des Übertragungshebels 10 sich noch nicht gegen den Gewindestift 38 legt, bleibt der bisherige Zustand maximaler Gaszufuhr erhalten. Dies entspricht in Fig. 3 dem Kurvenverlauf links vom Punkt $A_o$. Sobald bei weiterem Temperaturanstieg der rechte Hebelarm des Übertragungshebels 10 von unten gegen den Gewindestift 38 drückt, wird die vom Stift 85 auf den zweiten Übertragungshebel 81 ausgeübte Kraft der zweiten Blattfeder 46 verringert. Damit ist im Punkt $A_o$ der Anfang des Modulationsbereiches erreicht, der sich bis zum Punkt B erstreckt. In diesem Bereich ändert sich der Ausgangsdruck P in Abhängigkeit von der gemessenen Temperatur T.

In Fig. 3 sind im Modulationsbereich mehrere Kennlinien unterschiedlicher Neigung eingezeichnet. Von diesen ist die Kennlinie $A_o$-B am wenigsten geneigt. Sie ergibt sich, wenn der Schieber 83 so weit wie möglich nach rechts verschoben wird. Hier ist der Modulationsbereich am breitesten und die Druckänderung pro Grad Temperaturänderung am geringsten. Wird der Schieber 83 weiter nach links verschoben, beispielsweise in die aus Fig. 1 ersichtliche Position, so ergibt sich etwa die Kennlinie $A_i$-B. Verschiebt man den Schieber 83 so weit wie möglich nach links so wird die Kraft des Stiftes 85 praktisch unmittelbar über den Schieber 83 auf die erste Blattfeder 30 übertragen, was der Kennlinie $A_n$-B entspricht. Diese stellt einen praktisch stufenförmigen Übergang vom Maximalwert auf den Minimalwert des Ausgangsdruckes dar. Je nach der gewünschten Breite des Modulationsbereiches oder Proportionalbandes und der gewünschten Neigung der Kennlinie innerhalb des Proportionalbandes wird der Schieber 83 auf dem zweiten Übertragungshebel 81 in eine entsprechende Position gebracht und dort beispielsweise mit Hilfe einer Feststellschraube gesichert.

Steigt vom Punkt B der Kurve gemäß Fig. 3 aus die Temperatur weiter an, so hebt der Übertragungshebel 10 über den Gewindestift 38 den Stift 85 vom zweiten Übertragungshebel 81 ab, so daß nunmehr nur noch die Kraft der ersten Blattfeder 30 auf die Membran 25 einwirkt, während die zweite Blattfeder 46 wirkungslos ist. Die erste Blattfeder 30 bestimmt den minimalen Steuerdruck und damit die Mindesgasmenge, welche durch das Hauptventil zum Brenner fließt. Mit Hilfe des Gewindestifts 32 läßt sich diese Mindesmenge auf den gewünschten Wert einstellen. Der Gewindestift 32 ändert die Vorspannung der Feder 30. Beide Blattfedern 30 und 46 wirken in der gleichen Richtung, nämlich in Richtung auf die Membran 25. Steigt die Temperatur trotz Verringerung der Gaszufuhr auf die eingestellte Mindestmenge weiter an, so betätigt die am rechten Hebelarm des ersten Übertragungshebels 10 befestigte Blattfeder 49 im Punkt C der Kurve gemäß Fig. 3 den Schalter 51 und öffnet damit den Stromkreis eines Magnetventils, welches die Gaszufuhr zum Druckregler abschaltet. Damit erhält das Hauptventil keinen Steuerdruck mehr und schließt unter der Kraft seiner Schließfeder. Der Abstand zwischen den Punkten B und C läßt sich durch Verstellen des Gewindestiftes 38 in der Blattfeder 46 einstellen. Der Gewindestift 38 kann auch links vom Stift 85 und der Blattfeder 46 befestigt sein, wie dies in Fig. 1 gestrichelt angedeutet ist.

Normalerweise erreicht die Temperatur den Grenzwert entsprechend Punkt C nicht, sei es weil die Wärmeabstrahlung des Kessels gerade der Wärmezufuhr bei Mindestdurchsatz das Gleichgewicht hält, sei es daß die Temperatur infolge der verringerten Wärmezufuhr zurückgeht. Hat der Grenzwertschalter angesprochen und geht infolge Abkühlung des den Fühler 16 umspülenden Wassers der Stift 20 nach oben, so schaltet der Schalter 51 nach Durchlaufen des Schaltdifferentials S im Punkt D das Servosystem wieder ein, so daß der Hauptbrenner gezündet wird, und zwar in der Stellung des Mindestgasdurchsatzes. Nimmt die Temperatur trotzdem weiter ab, so schwenkt der Übertragungshebel 10 weiter im Uhrzeigersinn, bis der Stift 85 erneut auf den zweiten Übertragungshebel 81 aufsetzt und damit im Punkt B der Modulationsbereich wieder erreicht ist. Sinkt die Temperatur, beispielsweise infolge starker Warmwasserentnahme oder von erhöhtem Heizbedarf weiter ab, so schwenkt der erste Übertragungshebel 10 weiter im Uhrzeigersinn, und die von der zweiten Blattfeder 46 über den Stift 85 auf die auf die Membran 25 einwirkende Kraft nimmt zu. Das Druckreglerventil 2,5 schließt in zunehmendem Maße, so daß der Steuerdruck in der Kammer an ansteigt und das Hauptventil weiter geöffnet wird. Sobald der erste Übertragungshebel 10 so weit im Uhrzeigersinn geschwenkt ist, daß sein rechter Hebelarm vom Gewindestift 38 abhebt, wirkt wieder die volle Kraft der zweiten Blattfeder 46 auf die Membran 25. Damit ist erneut in einem der Punkte $A_0$-$A_n$ der maximale Steuerdruck $P_{max}$ erreicht und das Hauptventil voll geöffnet. Die Temperatur wird von hier aus wieder zunehmen.

In Fig. 2 ist eine Abwandlung des Druckreglers gemäß Fig. 1 dargestellt. Anstelle eines getrennten Übertragungsstiftes 85 und Gewindestiftes 38 ist hier nur ein Stift 185 an der zweiten Blattfeder 146 befestigt. Als veränderbarer Anschlag zur Kraftübertragung vom rechten Hebelarm des Übertragungshebels 110 auf die zweite Blattfeder 146 dient hier eine auf dem Stift 185 verstellbare Mutter 138. Der Gewindestift 185 ragt wiederum durch eine Öffnung im rechten Hebelarm des ersten Übertragungshebels 110 hindurch und steht dem linken Ende 84 des zweiten Übertragungshebels 81 gegenüber. Die Wirkungsweise dieser Ausführungsform ist die gleiche wie der zuvor beschriebene.

**Ansprüche**

1. Druckregler, dessen Sollwert von einem Temperaturfühler (16) über einen Übertragungshebel (10) durch Federkraftverstellung steuerbar ist, insbesondere zur Regelung des Servo-Steuerdrucks für ein servogesteuertes Gasregelventil, wobei eine entsprechend dem erforderlichen Mindestdruck vorgespannte erste Blattfeder (30) auf eine den Drosselkörper (5) eines Ventils tragende Membran (25) einwirkt und eine den erforderlichen Maximaldruck bestimmende zweite Blattfeder (46) sich einerseits an einem im Gehäuse verstellbaren Gegenstück abstützt und andererseits bei niedrigen Temperaturen zusätzlich auf die Membran (25) einwirkt, während sie bei höheren Temperaturen über einen verstellbaren Mitnahmeanschlag (38) durch den Übertragungshebel (10) außer Einwirkung bringbar ist, dadurch gekennzeichnet, daß um eine gehäusefeste Achse (82) schwenkbar und im wesentlichen parallel zur ersten Blattfeder (30) ein zweiter Übertragungshebel (81) vorgesehen ist ; längs dieses zweiten Übertragungshebels (81) ein auf die erste Blattfeder (30) einwirkender Schieber (83) verstellbar ist ; und die zweite Blattfeder (46) einen auf den zweiten Übertragungshebel (81) einwirkenden Stift (85) trägt.

2. Druckregler nach Anspruch 1, dadurch gekennzeichnet, daß der Mitnahmeanschlag als seitlich zum Stift (85) in der zweiten Blattfeder (46) verstellbarer Gewindestift (38) ausgebildet ist.

3. Druckregler nach Anspruch 1, dadurch gekennzeichnet, daß der Mitnahmeanschlag als auf dem Stift (185) verstellbare Mutter (138) ausgebildet ist (Fig. 2).

4. Druckregler nach einem der Ansprüche 1 bis 3, dadurch gekennzeichnet, daß der Stift (85, 185) durch eine Ausnehmung (86) des ersten Übertragungshebels (10, 110) frei hindurchragt.

5. Druckregler nach einem der Ansprüche 1 bis 4, dadurch gekennzeichnet, daß die dem erforderlichen Mindestdruck entsprechende Vorspannung der ersten Blattfeder (30) mit Hilfe eines im Gehäuse (13) verstellbaren Gewindestiftes (32) einstellbar ist.

6. Druckregler nach Anspruch 5, dadurch gekennzeichnet, daß der Gewindestift (32) durch eine Ausnehmung (87) im zweiten Übertragungshebel (81) berührungsfrei hindurchragt.

**Claims**

1. Pressure regulator the set point of which can be controlled by a temperature sensor (16) by adjusting a spring force via a transmission lever (10), in particular for regulating the servo control pressure for a servo controlled gas valve, whereat a leaf spring (30) biased in accordance with the required minimum pressure acts upon a diaphragm (25) which carries the closure member (5) of a valve, and whereat a second leaf spring (46) abuts on one side against a counter piece which is adjustable within the housing and on the other side at low temperatures additionally acts upon the diaphragm (25) whilst at high temperatures said second leaf spring can be rendered ineffective by means of the transmission lever (10) via an adjustable abutment catch (38) characterized in that a second transmission lever (81) is provided which is turnable around a stationary axis (82) and extends essentially in parallel to the first leaf spring (30) ; that along this second transmission lever (81) a slider (83) is adjustable which acts upon the first leaf spring (30) ; and that the second leaf spring (46) carries a pin (85) which acts upon the second transmission lever (81).

2. Pressure regulator according to Claim 1 characterized in that the abutment catch is formed as a screwed pin (38) which aside of pin (85) can be adjusted within the second leaf spring (46).

3. Pressure regulator according to Claim 1 characterized in that the abutment catch is formed by a nut (138) which is adjustable on pin (185) (Figure 2).

4. Pressure regulator according to one of Claims 1 to 3 characterized in that the pin (85, 185) projects freely through an opening (86) of the first transmission lever (10, 110).

5. Pressure regulator according to one of Claims 1 to 4 characterized in that the bias of the first leaf spring (30) which corresponds to the required minimum pressure is adjustable by means of a threaded pin (32) which is adjustable within the housing (13).

6. Pressure regulator according to Claim 5 characterized in that the threaded pin (32) projects touch-freee through a hole (87) in the second transmission lever (81).

## Revendications

1. Régulateur de pression dont la valeur de consigne peut être commandée par une sonde de température (16) par modification d'une force élastique à l'aide d'un levier de transmission et notamment pour la régulation de la servopression de commande d'une valve de régulation de gaz servocommandée, dans lequel une première lame élastique (30) précontrainte en correspondance à la pression minimale nécessaire agit sur une membrane portant le corps d'étranglement (5) d'une valve, et une seconde lame élastique (46) déterminant la pression maximale nécessaire s'appuie d'un côté contre une pièce antagoniste déplaçable dans le carter et de l'autre côté agit additionnellement sur la membrane (25) aux basses températures, alors que, aux températures élevées, elle peut être mise hors d'action par le levier de transmission (10) par l'intermédiaire d'une butée d'entraînement réglable (38), caractérisé en ce qu'il est prévu un second levier de transmission (81) monté à pivot sur un axe (82) solidaire du boîtier et sensiblement parallèle à la première lame élastique (30) ; en ce qu'un poussoir (83) agissant sur la première lame élastique (30) est déplaçable le long de ce second levier de transmission (81) et en ce que la seconde lame élastique (46) porte une broche (85) qui agit sur le second levier de transmission (81).

2. Régulateur de pression selon la revendication 1, caractérisé en ce que la butée d'entraînement est agencée sous la forme d'une tige filetée (38) déplaçable dans la seconde lame élastique (46) à côté de la broche (85).

3. Régulateur de pression selon la revendication 1, caractérisé en ce que la butée d'entraînement est agencée sous la forme d'un écrou (138) déplaçable sur la tige (185) (figure 2).

4. Régulateur de pression selon l'une des revendications 1 à 3, caractérisé en ce que la tige (85, 185) passe librement au travers d'un évidement (86) du premier levier de transmission (10, 110).

5. Régulateur de pression selon l'une quelconque des revendications 1 à 4, caractérisé en ce que la précontrainte, correspondant à la pression minimale nécessaire, de la première lame élastique (30) est réglable à l'aide d'une tige filetée (32) mobile dans le carter (13).

6. Régulateur de pression selon la revendication 5, caractérisé en ce que la tige filetée (32) traverse sans contact un évidement (87) ménagé dans le second levier de transmission (81).

fig.1

fig.2

fig. 3

0 013 993